# EUROPEAN PATENT APPLICATION

(11) **EP 4 576 408 A1**
(43) Date of publication of application: **25.06.2025**
(21) Application number: 24849659.8
(22) Date of filing: 02.08.2024
(51) Int. Cl.: H01M 50/583, H01M 50/538, H01M 50/213, H01M 50/249

(54) **CURRENT COLLECTOR PLATE, CYLINDRICAL BATTERY CELL INCLUDING SAME, AND BATTERY PACK AND VEHICLE INCLUDING CYLINDRICAL BATTERY CELL**

(30) Priority: 03.08.2023 KR 20230101813; 18.03.2024 KR 20240037365
(71) Applicant: LG Energy Solution, Ltd., Seoul 07335 (KR)
(72) Inventor: LIM, Seong-Min, Daejeon 34122 (KR); LEE, Byoung-Gu, Daejeon 34122 (KR); NA, Jong-Seung, Daejeon 34122 (KR); KIM, Do-Yun, Daejeon 34122 (KR); LEE, So-Yeon, Daejeon 34122 (KR)
(74) Representative: Goddar, Heinz J.
(86) International application number: PCT/KR2024/011431
(87) International publication number: WO 2025/029092

(57) **Abstract**

Disclosed is a current collection plate, a cylindrical battery cell including the same, and a battery pack and a vehicle including the cylindrical battery cell. The current collection plate electrically connects an electrode assembly accommodated in a cylindrical battery cell, and includes a border portion defining a border; a center portion spaced apart from the border portion and coupled to the electrode assembly; and a connection portion configured to connect the border portion and the center portion, the connection portion being formed to have a varying width.

## Description

### TITLE OF INVENTION

### CURRENT COLLECTION PLATE, CYLINDRICAL BATTERY CELL INCLUDING THE SAME, AND BATTERY PACK AND VEHICLE INCLUDING CYLINDRICAL BATTERY CELL

### TECHNICAL FIELD

This application is based on and claims priority from Korean Patent Application No. 10-2023-0101813, filed on August 3, 2023, and Korean Patent Application No. 10-2024-0037365, filed on March 18, 2024, with the Korean Intellectual Property Office, the disclosure of which is incorporated herein in its entirety by reference.

The present disclosure relates to a current collection plate, a cylindrical battery cell including the same, and a battery pack and a vehicle including the cylindrical battery cell. More specifically, the present disclosure relates to a current collection plate having a connection portion that may be disconnected without increasing an internal resistance of a battery cell when a short-circuit current is applied, and a cylindrical battery cell including the same, and a battery pack and a vehicle including the cylindrical battery cell.

### BACKGROUND ART

Due to their characteristics of being easily applicable to various products and electrical properties such as high energy density, secondary batteries are not only commonly applied to portable devices, but universally applied to electric vehicles (EVs) or hybrid electric vehicle (HEVs) that are driven by an electrical driving source.

Such secondary batteries are gaining attention for their primary advantage of remarkably reducing the use of fossil fuels and not generating by-products from the use of energy, making it a new eco-friendly and energy efficient source of energy.

The types of secondary batteries widely used at present include lithium ion batteries, lithium polymer batteries, nickel cadmium batteries, nickel hydrogen batteries, nickel zinc batteries or the like. This unit secondary battery cell has an operating voltage of about 2.5V to 4.5V.

Accordingly, when a higher output voltage is required, a plurality of battery cells may be connected in series to form a battery module or a battery pack. Additionally, the battery module or the battery pack may be fabricated by connecting the plurality of battery cells in parallel according to the required charge/discharge capacity. Accordingly, the number of battery cells included in the battery module or the battery pack and the electrical connection type may be variously set depending on at least one of the required output voltage or charge/discharge capacity.

Meanwhile, the secondary battery cells include cylindrical, prismatic and pouch-type battery cells. A cylindrical battery cell is fabricated by winding a positive electrode plate and a negative electrode plate with an insulator or a separator interposed therebetween to form a jelly-roll type electrode assembly, and inserting the jelly-roll type electrode assembly in a battery can together with an electrolyte. In addition, the cylindrical battery cell may use a current collection plate to electrically connect the positive electrode plate and the negative electrode plate.

Meanwhile, recently, as cylindrical battery cells are used in electric vehicles, the form factor of the cylindrical battery cells increases. That is, the diameter and height of the cylindrical battery cells increase compared to cylindrical battery cells with 18650, 21700 form factors. The increase in form factor leads to the increased energy density, enhanced safety against thermal runaway and improved cooling efficiency.

Here, as the form factor increases, the need to protect the cylindrical battery cell from a short-circuit current also increases. As an example, a fusing portion (e.g. a notching groove) may be formed on the current collector plate. However, simply forming a fusing portion on the current collection plate does not make it easy to smoothly disconnect the connection portion of the current collection plate without increasing the internal resistance of the battery cell when a short-circuit current is applied.

Normally, when the internal resistance of a battery cell increases, the internal resistance impedes the flow of current, so that the connection portion of the current collection plate is not disconnected when a short-circuit current is applied, and the current continues to flow, eventually causing the battery cell to catch fire or explode.

Therefore, there is needed a structure in which the current collection plate is disconnected without increasing the internal resistance of the battery cell when a short-circuit current is applied.

### DISCLOSURE

### Technical Problem

Therefore, the present disclosure is directed to providing a current collection plate having a connection portion that may be disconnected without increasing an internal resistance of a battery cell when a short-circuit current is applied, and a cylindrical battery cell including the same, and a battery pack and a vehicle including the cylindrical battery cell.

In addition, the present invention is directed to providing a current collection plate capable of preventing ignition of a battery cell by blocking the flow of current due to rupture of a connection portion of the current collection plate when a short-circuit current is applied, a cylindrical battery cell including the same, and a battery pack and a vehicle including the cylindrical battery cell.

However, the technical problems to be solved by the present disclosure are not limited to the above, and other problems not mentioned herein will be clearly understood by those skilled in the art from the following description.

### Technical Solution

In one aspect of the present disclosure, there is provided a current collection plate, which electrically connects an electrode assembly accommodated in a cylindrical battery cell, the current collection plate comprising: a border portion defining a border; a center portion spaced apart from the border portion and coupled to the electrode assembly; and a connection portion configured to connect the border portion and the center portion, the connection portion being formed to have a varying width.

In an embodiment, the border portion may have a rim shape in which at least a part of an inner region thereof is empty.

In an embodiment, the connection portion may include a first part connected to the center portion and a second part connected to the border portion, and a width of the first part may be narrower than a width of the second part.

In an embodiment, a first connection part between the first part and the second part may be formed to be inclined.

In an embodiment, the first connection part may include a first inclined part at one side and a second inclined part at the other side, and the first inclined part and the second inclined part may be formed symmetrically to each other.

In an embodiment, the first connection part may be formed to be inclined so as to extend from the first part toward the second part and may be connected to the second part.

In an embodiment, an end of the second part may be located further from the center portion than an end of the first part at an outside of the end of the first part, and the first connection part may connect the end of the first part and the end of the second part from the end of the first part toward the second part.

In an embodiment, the first connection part may be formed to be inclined so as to extend from the first part toward the center portion and may be connected to the second part.

In an embodiment, an end of the second part may be located closer to the center portion than an end of the first part at an outside of the end of the first part, and the first connection part may connect the end of the second part from the end of the first part toward the center portion.

In an embodiment, the first part and the second part may be connected perpendicularly to each other.

In an embodiment, an end of the second part may be located outer than an end of the first part, the end of the second part and the end of the first part may be located at the same distance from the center portion, and the first connection part may connect the end of the first part and the end of the second part to each other.

In an embodiment, a second connection part between the second part and the border portion may be formed to be inclined.

In an embodiment, the second connection part may include a third inclined part at one side and a fourth inclined part at the other side, and the third inclined part and the fourth inclined part may be formed symmetrically.

In an embodiment, a through-hole may be formed between the third inclined part and the fourth inclined part.

Meanwhile, according to another aspect of the present disclosure, there may be provided a cylindrical battery cell including at least one current collection plate as described above, and further, there may be provided a battery pack including at least one cylindrical battery cell as described above, and further, there may be provided a vehicle including at least one cylindrical battery cell as described above.

### Advantageous Effects

According to one aspect of the present disclosure, there is an effect in which a connection portion may be disconnected without increasing the internal resistance of the battery cell when a short-circuit current is applied.

In addition, there is an effect of preventing ignition of the battery cell by blocking the flow of current due to the rupture of the connection portion of the current collection plate when a short-circuit current is applied.

However, the effects that can be obtained through the present disclosure are not limited to the above, and other effects not mentioned herein will be clearly understood by those skilled in the art from the following description.

### DESCRIPTION OF DRAWINGS

FIG. 1 is a drawing showing a current collection plate according to an embodiment of the present disclosure.
FIG. 2 is an enlarged view of part A of FIG. 1.
FIG. 3 is a drawing showing a current collection plate according to a modified embodiment of FIG. 1.
FIG. 4 is an enlarged view of part B of FIG. 3.
FIG. 5 is a drawing showing a current collection plate according to another modified embodiment of FIG. 1.
FIG. 6 is an enlarged view of part C of FIG. 5.
FIG. 7 is a drawing showing test conditions of the current collection plate of FIG. 1.
FIGS. 8(a) to 8(c) are graphs showing test results according to the test conditions of FIG. 7.
FIG. 9 is a drawing showing that fusing occurs in the test of the current collection plate according to the embodiment of FIG. 1.
FIG. 10 is a drawing showing a current collection plate according to a comparative example of each embodiment of the present disclosure.
FIG. 11 is a drawing showing test conditions of the current collection plate of FIG. 10.
FIGS. 12(a) to 12(c) are graphs showing test results according to the test conditions of FIG. 11.
FIG. 13 is a schematic cross-sectional view showing a cylindrical battery cell including the current collection plate according to each embodiment of the present disclosure.
FIG. 14 is a schematic drawing showing the configuration of a battery pack including the cylindrical battery cell according to each embodiment of the present disclosure.
FIG. 15 is a drawing for explaining a vehicle including the battery pack according to each embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation. Therefore, the description proposed herein is just a preferable example for the purpose of illustrations only, not intended to limit the scope of the disclosure, so it should be understood that other equivalents and modifications could be made thereto without departing from the scope of the disclosure.

In the drawings, the size of each component or a specific portion constituting the component is exaggerated, omitted, or schematically illustrated for convenience and clarity of description. Therefore, the size of each component does not fully reflect the actual size. If it is determined that a detailed description of a related known function or configuration may unnecessarily obscure the gist of the present disclosure, such a description will be omitted.

As used herein, the term 'coupling' or 'connection' refers to not only a case where one member and another member are directly coupled or directly connected, but also a case where one member is indirectly coupled or indirectly connected to another member through a joint member.

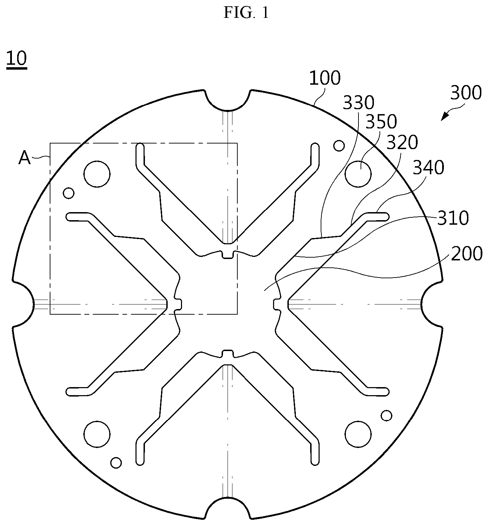

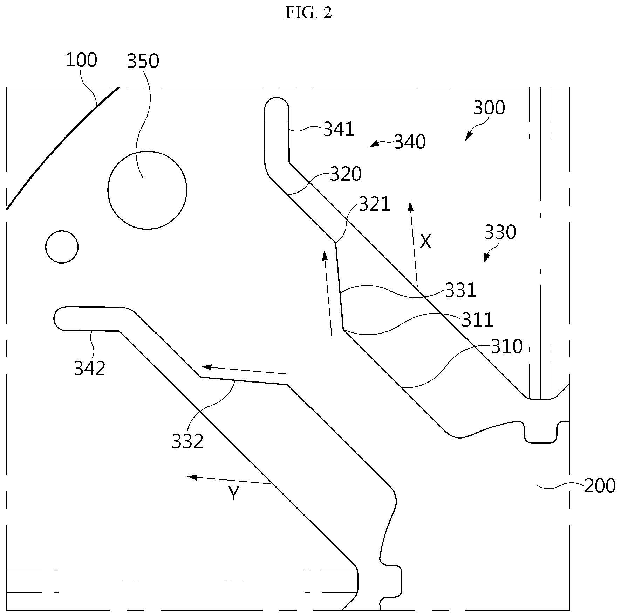

FIG. 1 is a drawing showing a current collection plate according to an embodiment of the present disclosure, and FIG. 2 is an enlarged view of part A of FIG. 1.

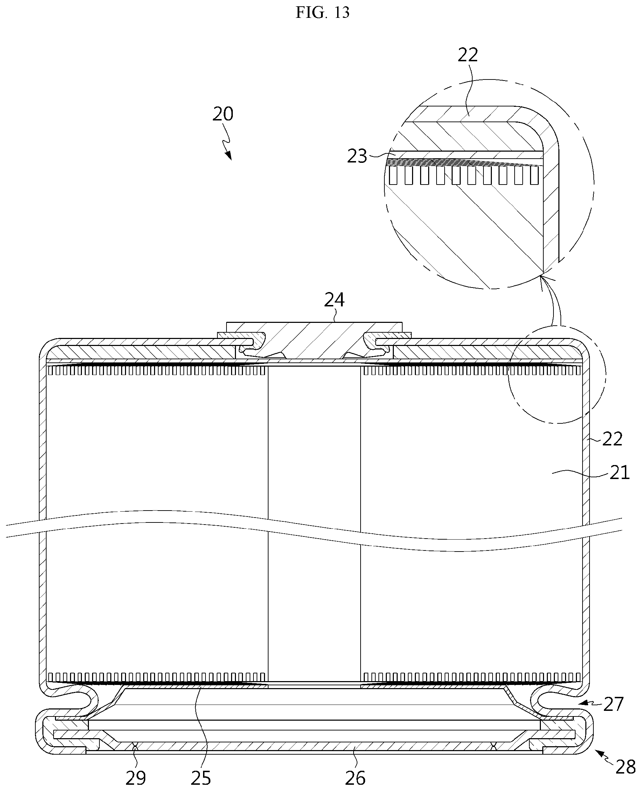

A current collection plate 10 according to an embodiment of the present disclosure is configured to electrically connect an electrode assembly 21 (see FIG. 13) accommodated inside a cylindrical battery cell 20 (see FIG. 13). The cylindrical battery cell 20 will be described later in detail. The current collection plate 10 according to an embodiment of the present disclosure may be used as a positive electrode current collection plate 23 (see FIG. 13) of the cylindrical battery cell 20.

Referring to FIG. 1, the current collection plate 10 according to an embodiment of the present disclosure includes a border portion 100, a center portion 200, and a connection portion 300. The current collection plate 10 is configured to electrically connect the electrode assembly 21 accommodated inside the cylindrical battery cell 20.

The border portion 100 defines a border and may have an approximate rim shape in which at least a part of the inner region thereof is empty to form an inner space. In FIG. 1, the border portion 100 is illustrated as having an approximately circular rim shape, but the shape of the border portion 100 is not limited thereto. Unlike this, the border portion 100 may have an approximately rectangular rim shape, a hexagonal rim shape, an octagonal rim shape, or other shapes. The border portion 100 may be coupled to the connection portion 300.

The center portion 200 is located at the inner side of the border portion 100 and is spaced apart from the border portion 100. For example, the center portion 200 may be located at the exact center of the inner space of the border portion 100, but is not limited thereto. In addition, the center portion 200 is coupled to the connection portion 300 and is connected to the border portion 100 by the connection portion 300. In addition, the center portion 200 is coupled to the electrode assembly 21 of the cylindrical battery cell 20. However, not only the center portion 200 is coupled to the electrode assembly 21, and the border portion 100 and the connection portion 300 may also be coupled to the electrode assembly 21. In addition, the center portion 200 may be arranged at a position corresponding to a center hole of the electrode assembly 21.

The connection portion 300 connects the border portion 100 and the center portion 200. The connection portion 300 may be provided in plurality, and the plurality of connection portions 300 may be spaced apart from each other. In FIG. 1, four connection portions 300 are provided, but the number of connection portions 300 is not limited thereto. In addition, the plurality of connection portions 300 may be arranged at equal intervals from each other, but is not limited thereto.

Referring to FIGS. 1 and 2, the connection portion 300 may be formed to have a varying width. That is, the connection portion 300 connects the border portion 100 and the center portion 200, and the width of the connection portion 300 changes from the border portion 100 to the center portion 200, or from the center portion 200 to the border portion 100.

The connection portion 300 may include a first part 310 connected to the center portion 200 and a second part 320 connected to the border portion 100. Referring to FIGS. 1 and 2, the width of the first part 310 may be narrower than the width of the second part 320. That is, the width of the connection portion 300 gradually increases from the relatively narrow first part 310 toward the second part 320.

Also, the first connection part 330 of the first part 310 and the second part 320 may be formed to be inclined. That is, the first connection part 330 is connected to be inclined from the first part 310 toward the second part 320.

In addition, referring to FIG. 2, the first connection part 330 may include a first inclined part 331 at one side and a second inclined part 332 at the other side, and the first inclined part 331 and the second inclined part 332 may be configured to have the same inclination toward opposite directions. That is, referring to FIG. 2, the first inclined part 331 may be formed in the X direction, and the second inclined part 332 may be formed in the Y direction. By this structure, the first inclined part 331 and the second inclined part 332 may be formed symmetrically.

Referring to FIG. 2, the first connection part 330 may be formed to be inclined so as to extend from the first part 310 toward the second part 320 and may be connected to the second part 320. For example, the end 321 of the second part 320 is located farther from the center portion 200 than the end 311 of the first part 310 at the outside of the end 311 of the first part 310. In addition, the first connection part 330 may be configured to connect the end 311 of the first part 310 and the end 321 of the second part 320 from the end 311 of the first part 310 toward the second part 320.

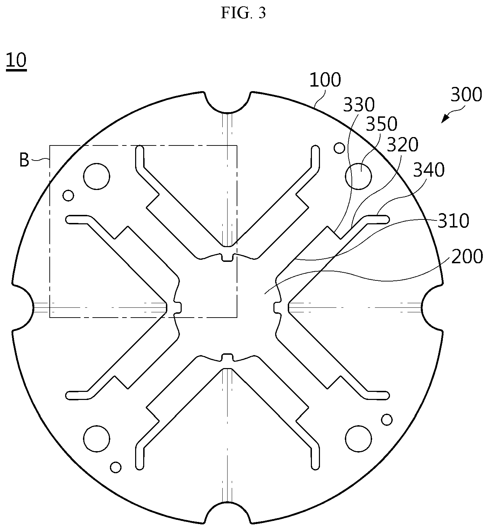

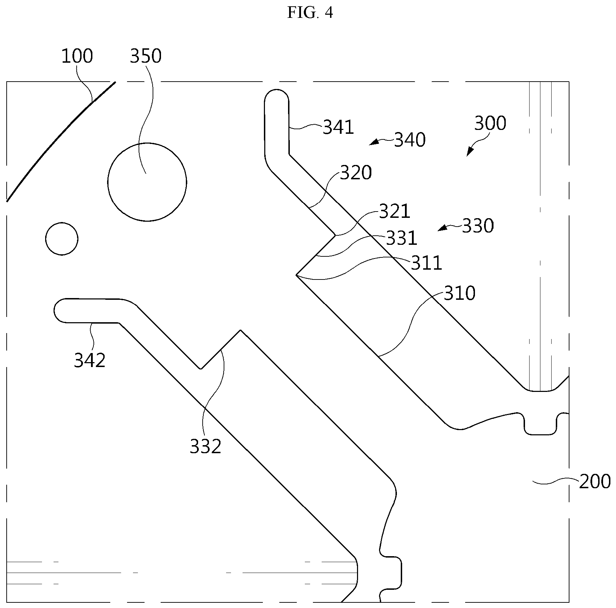

FIG. 3 is a drawing showing a current collection plate according to a modified embodiment of FIG. 1, and FIG. 4 is an enlarged view of part B of FIG. 3.

Referring to FIGS. 3 and 4, the end 321 of the second part 320 may be located further outside than the end 311 of the first part 310, the end 321 of the second part 320 and the end 311 of the first part 310 may be located at the same distance from the center portion 200, and the first connection part 330 may be configured to connect the end 311 of the first part 310 and the end 321 of the second part 320 to each other. Accordingly, the first part 310 and the second part 320 may be connected perpendicularly to each other.

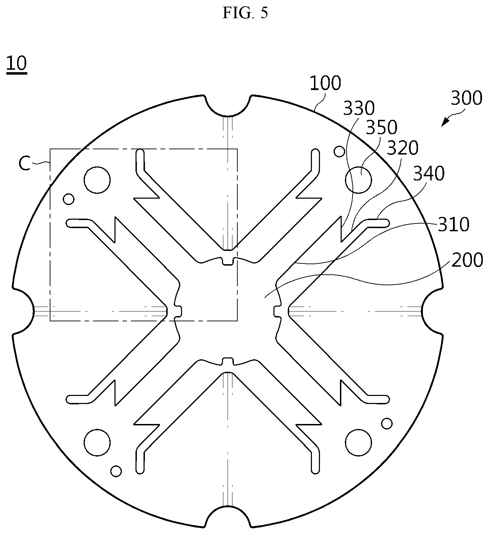

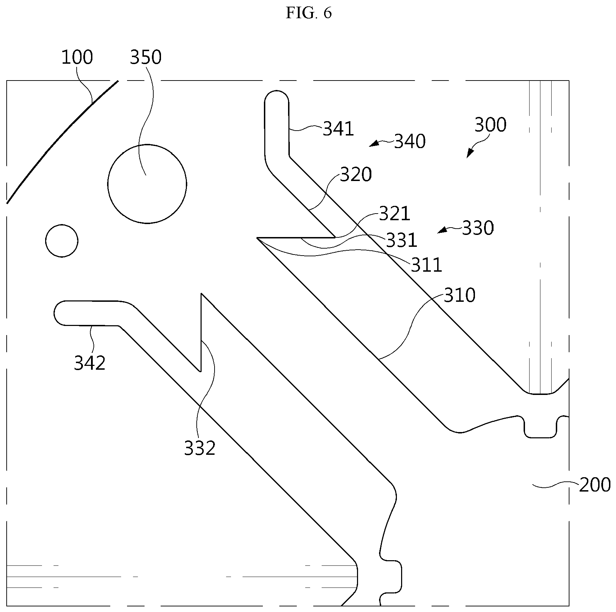

FIG. 5 is a drawing showing a current collection plate according to another modified embodiment of FIG. 1, and FIG. 6 is an enlarged view of part C of FIG. 5.

Referring to FIGS. 5 and 6, the first connection part 330 may be formed to be inclined so as to extend from the first part 310 toward the center portion 200 and may be connected to the second part 320. For example, the end 321 of the second part 320 may be located closer to the center portion 200 than the end 311 of the first part 310 at the outside of the end 311 of the first part 310, and the first connection part 330 may be configured to connect the end 321 of the second part 320 from the end 311 of the first part 310 toward the center portion 200.

Here, the same or similar effect as the embodiment of FIG. 1 may be obtained in the modified embodiment of FIG. 3 and the modified embodiment of FIG. 5.

Referring to FIGS. 2, 4, and 6 together, the second connection part 340 of the second part 320 and the border portion 100 may also be formed to be inclined. That is, the second connection part 340 is connected to be inclined from the second part 320 toward the border portion 100.

Also, the second connection part 340 includes a third inclined part 341 at one side and a fourth inclined part 342 at the other side, and the third inclined part 341 and the fourth inclined part 342 may be configured to have the same inclination toward opposite directions.

That is, referring to FIG. 2, the third inclined part 341 may be formed in the X direction, and the fourth inclined part 342 may be formed in the Y direction. Here, the third inclined part 341 may be formed parallel to the X direction, but does not necessarily have to be parallel, and the fourth inclined part 342 may also be formed parallel to the Y direction, but does not necessarily have to be parallel.

Due to this structure, the third inclined part 341 and the fourth inclined part 342 may be formed symmetrically. Here, a through-hole 350 may be formed between the third inclined part 341 and the fourth inclined part 342.

However, the first inclined part 331 and the third inclined part 341 may be parallel, but do not have to be parallel, and the second inclined part 332 and the fourth inclined part 342 may also be parallel, but do not have to be parallel.

If the connection portion 300 of the current collection plate 10 is formed to have a varying width in this way, there is an effect in which the connection portion 300 may be disconnected without increasing the internal resistance of the battery cell when a short-circuit current is applied.

That is, since the internal resistance of the battery cell does not increase due to the structure described above, the performance of the cylindrical battery cell 20 may be maintained, and when a short-circuit current is applied, the connection portion 300 is disconnected to perform a fusing function, thereby preventing the flow of current from being cut off and ignition from occurring.

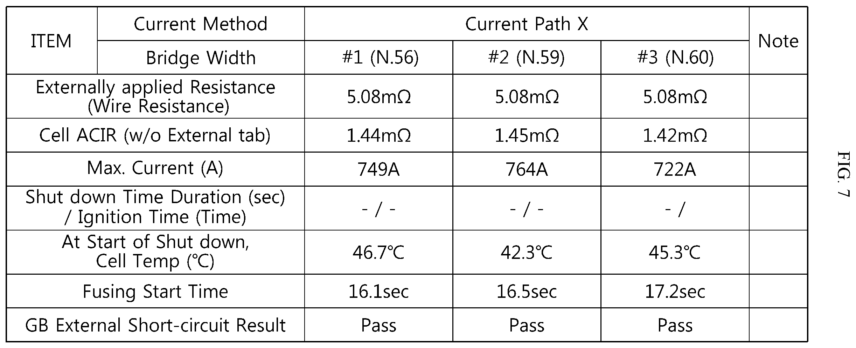

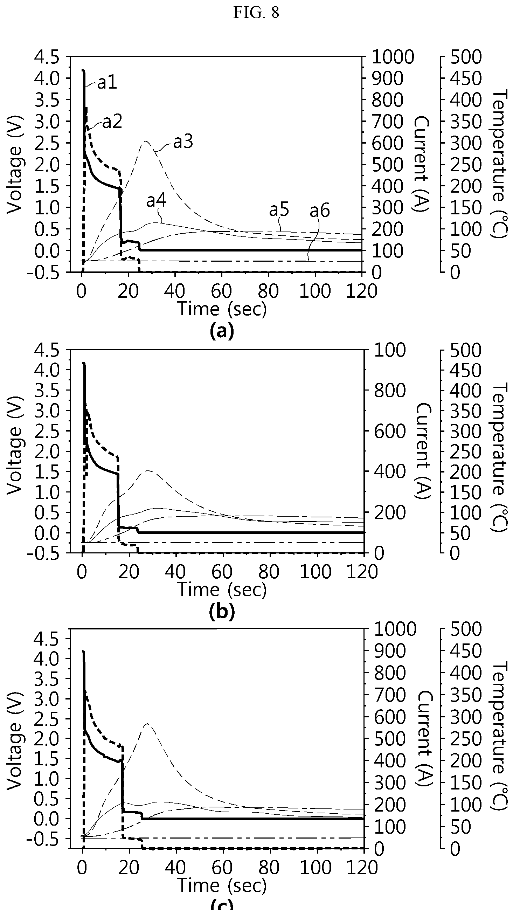

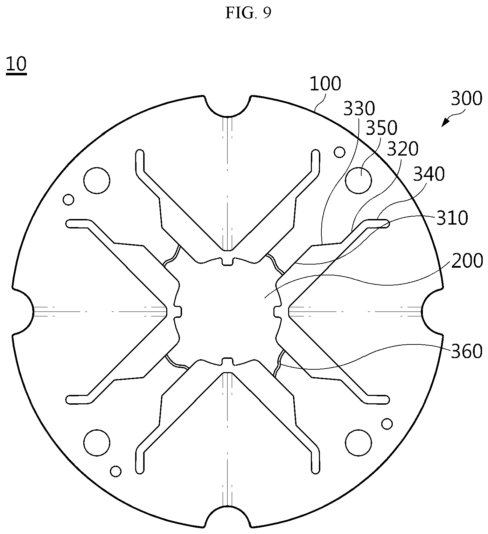

FIG. 7 is a drawing showing test conditions of the current collection plate of FIG. 1, FIGS. 8(a) to 8(c) are graphs showing test results according to the test conditions of FIG. 7, and FIG. 9 is a drawing showing that fusing occurs in the test of the current collection plate according to the embodiment of FIG. 1.

Referring to FIG. 7, three tests (#1, #2, #3) were performed under the same conditions. Regarding the test conditions, first, the externally applied resistance was 5.08 [mΩ]. Also, the internal resistance of the battery cell in each of the three tests was 1.44 [mΩ], 1.45 [mΩ], and 1.42 [mΩ]. Also, the maximum current in the three tests was 749 [A], 764 [A], and 722 [A]. In addition, the temperature of the battery cell in the three tests at the start of the shutdown was 46.7 [°C], 42.3 [°C], and 45.3 [°C].

In all of three tests, the internal resistance of the battery cell did not exceed 1.5 [mΩ].

Referring to FIG. 7, the fusing start time in each of the three tests was 16.1 [sec], 16.5 [sec], and 17.2 [sec], and it did not exceed 20 [sec] in any of the three tests. In this regard, the thick solid line (a1) at the left in FIG. 8(a) represents voltage, and the thick dotted line (a2) at the left represents current (the same applies to FIGS. 8(b) and 8(c)). Referring to FIGS. 8(a) to 8(c), in FIG. 8(a), it may be confirmed that fusing occurs at 16.1 [sec] and the voltage and current drop sharply, in FIG. 8(b), it may be confirmed that fusing occurs at 16.5 [sec] and the voltage and current drop sharply, and in FIG. 8(c), it may be confirmed that fusing occurs at 17.2 [sec] and the voltage and current drop sharply.

That is, it may be experimentally confirmed that overcurrent may be prevented from flowing since an appropriate fusing time is provided in the embodiment of the present disclosure.

In addition, referring to FIG. 7 again, the external short-circuit result was a pass in all of three tests. Here, the pass in the external short-circuit result means that when a short-circuit current is applied to the battery cell, the internal resistance does not exceed a preset range (e.g., 1.5 [mΩ]), and within a preset time (e.g., 20 [sec]), fusing, namely disconnection of the connection portion 300, occurs so that the battery cell does not catch fire or explode. Referring to FIG. 9, fusing 360 has occurred near the connection point between the center portion 200 and the first part 310.

Meanwhile, in FIG. 8(a), the thin dotted line (a3) is the temperature of the positive electrode tab of the cylindrical battery cell 20, the thin solid line (a4) is the temperature of the negative electrode tab of the cylindrical battery cell 20, the single-dot chain line (a5) is the temperature of the battery can 22 (see FIG. 13) of the cylindrical battery cell 20, and the two-dot chain line (a6) is the temperature of the venting portion of the cylindrical battery cell 20 (the same applies to FIGS. 8(b) and 8(c)).

Referring to FIGS. 8(a) to 8(c), the temperature of the positive electrode tab rises slightly and then decreases (see a3), and the temperature of the negative electrode tab, the temperature of the battery can 22, and the temperature of the venting section are maintained within an appropriate range. That is, according to an embodiment of the present disclosure, it may be experimentally confirmed that the temperature rise is not excessive and, as a result, the cylindrical battery cell 20 does not ignite.

Ultimately, that is, the current collection plate according to an embodiment of the present disclosure has the effect of enabling smooth fusing by disconnecting the connection portion without increasing the internal resistance of the battery cell when a short-circuit current is applied, and also preventing ignition of the battery cell by blocking the flow of current due to the rupture of the connection portion of the current collection plate when a short-circuit current is applied.

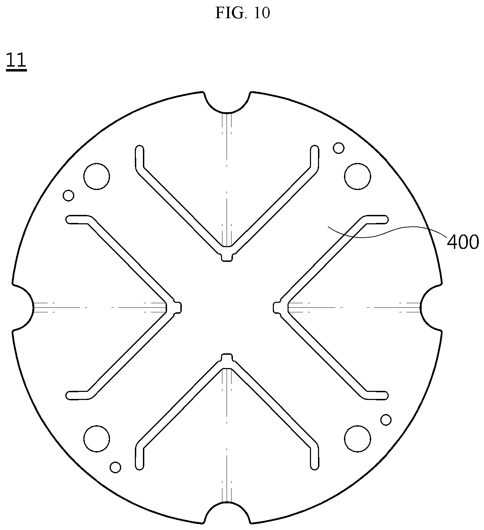

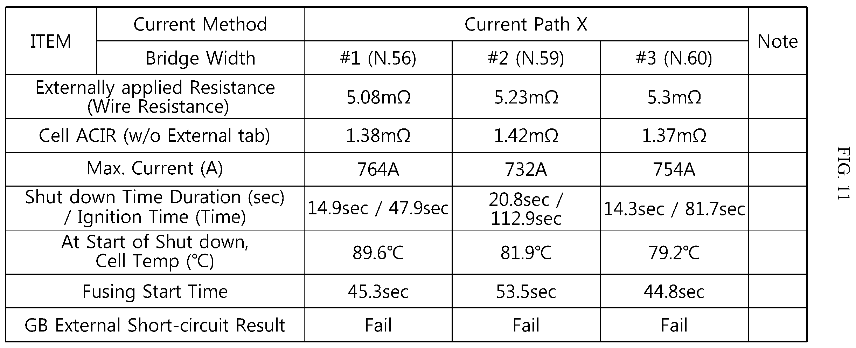

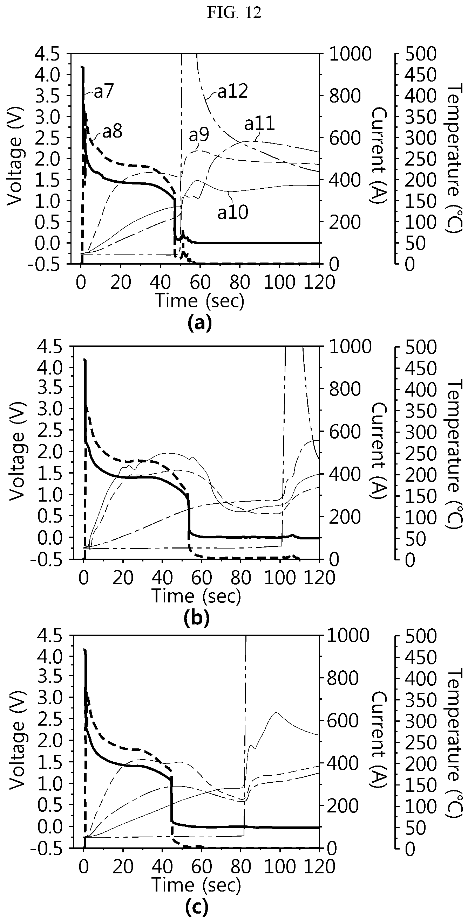

FIG. 10 is a drawing showing a current collection plate according to a comparative example of each embodiment of the present disclosure, FIG. 11 is a drawing showing test conditions of the current collection plate of FIG. 10, and FIGS. 12(a) to 12(c) are graphs showing test results according to the test conditions of FIG. 11.

Referring to FIG. 10, a current collection plate 11 in which the width of the connection portion 400 does not change is illustrated.

Referring to FIG. 11, three tests (#1, #2, #3) were performed under the same conditions as FIG. 7. Regarding the test conditions, first, the externally applied resistance of each of the three tests is 5.08 [mΩ], 5.23 [mΩ], and 5.3 [mΩ]. Also, the internal resistance of the battery cell of each of the three tests is 1.38 [mΩ], 1.42 [mΩ], and 1.37 [mΩ]. In addition, the maximum current of each of the three tests is 764 [A], 732 [A], and 754 [A]. Also, the temperature of the battery cell of each of the three tests at the start of the shutdown is 89.6 [°C], 81.9 [°C], and 79.2 [°C].

In all of the three tests, the internal resistance of the battery cell does not exceed 1.5 [mΩ].

Here, the thick solid line (a7) at the left in FIG. 12(a) represents voltage, and the thick dotted line (a8) at the left represents current (the same applies to FIGS. 12(b) and 12(c)). Referring to FIGS. 12(a) to 12(c), the fusing start time in each of the three tests is 45.3 [sec], 53.5 [sec], and 44.8 [sec], which exceeds 20 [sec] in all three cases.

That is, referring to FIG. 11 again, the external short-circuit result was a failure in all three tests. Here, the failure of the external short-circuit result means that when a short-circuit current is applied to the battery cell, fusing does not occur within a preset time (e.g., 20 [sec]), i.e., the connection portion 300 is not disconnected, which may eventually cause ignition or explosion of the battery cell.

In FIG. 12(a), the thin dotted line (a9) is the temperature of the positive electrode tab of the cylindrical battery cell 20, the thin solid line (a10) is the temperature of the negative electrode tab of the cylindrical battery cell 20, the single-dot chain line (a11) is the temperature of the battery can 22 (see FIG. 13) of the cylindrical battery cell 20, and the two-dot chain line (a12) is the temperature of the venting portion of the cylindrical battery cell 20 (the same applies to FIGS. 12(b) and 12(c)).

Referring to FIGS. 12(a) to 12(c), the temperature of the venting portion of the cylindrical battery cell 20 rapidly increases (see a12), and the temperature of the battery can 22 of the cylindrical battery cell 20 also increases (see a11), which means that fire occurs inside the cylindrical battery cell 20 and the flame is discharged to the outside through the venting portion. That is, regarding the current collection plate according to the prior art, it may be experimentally confirmed that the cylindrical battery cell is easily ignited.

That is, in the case of the current collection plate 10 (see FIG. 1) according to an embodiment of the present disclosure, referring to FIGS. 7 to 9, the connection portion 300 is disconnected within a preset time without the internal resistance of the cylindrical battery cell 20 exceeding a preset range, thereby preventing ignition or explosion of the cylindrical battery cell 20. However, in the case of the current collection plate of the comparative example 11 (see FIG. 10), referring to FIGS. 11 and 12, although the internal resistance of the battery cell does not exceed a preset range, as the connection portion 400 is not disconnected within a preset time, the battery cell is ignited.

Therefore, the current collection plate 10 according to an embodiment of the present disclosure may cause the connection portion 300 to be disconnected without increasing the internal resistance of the cylindrical battery cell 20 when a short-circuit current is applied, and also has the effect of preventing ignition of the cylindrical battery cell 20 by blocking the flow of current due to the rupture of the connection portion 300 of the current collection plate 10.

FIG. 13 is a schematic cross-sectional view showing a cylindrical battery cell including the current collection plate according to each embodiment of the present disclosure.

The cylindrical battery cell 20 includes an electrode assembly 21, a battery can 22, a positive electrode current collection plate 23, a cell terminal 24, and a negative electrode current collection plate 25. Here, the positive electrode current collection plate 23 of FIG. 13 may be the current collection plate 10 according to an embodiment of the present disclosure described above.

The electrode assembly 21 has a structure in which a positive electrode plate, a negative electrode plate, and a separator interposed between the positive electrode plate and the negative electrode plate are wound in one direction. In addition, a center hole is formed at the center of the electrode assembly 21, and the electrode assembly 21 may be formed in a jelly-roll type.

For example, the electrode assembly 21 may be manufactured by winding a stack that is formed by sequentially stacking a negative electrode plate, a separator, a positive electrode plate, and a separator at least once. Here, the positive electrode plate and the negative electrode plate may be formed in a sheet shape.

That is, the electrode assembly 21 applied to this embodiment may be a winding-type electrode assembly 21. In this case, an additional separator may be provided on the outer surface of the electrode assembly 21 for insulation from the battery can 22. That is, the electrode assembly 21 may have a winding structure well known in the art without limitation.

A positive electrode active material may be coated on one or both surfaces of the positive electrode plate, and a first uncoated portion where the positive electrode active material is not coated may be formed at an end of the positive electrode plate. Although a positive electrode plate on which a first uncoated portion is formed is illustrated in FIG. 13, the cylindrical battery cell 20 according to an embodiment of the present disclosure includes an embodiment of a positive electrode plate on which a first uncoated portion is not formed. However, for convenience of explanation, the following description will focus on a case in which a first uncoated portion is formed on the positive electrode plate. The first uncoated portion may be exposed to the outside of the separator while forming a plurality of winding turns based on the center of the electrode assembly 21, and may be used as an electrode tab in itself.

A negative electrode active material may be coated on one or both surfaces of the negative electrode plate, and a second uncoated portion where the negative electrode active material is not coated may be formed at an end of the negative electrode plate. Although FIG. 13 illustrates a negative electrode plate on which the second uncoated portion is formed, the cylindrical battery cell 20 according to an embodiment of the present disclosure includes an embodiment of a negative electrode plate on which the second uncoated portion is not formed. However, for convenience of explanation, the following description will focus on a case where the second uncoated portion is formed on the negative electrode plate. The second uncoated portion may be exposed to the outside of the separator while forming a plurality of winding turns based on the center of the electrode assembly 21, and may be used as an electrode tab in itself.

That is, at least one of the positive electrode plate and the negative electrode plate may include an uncoated portion where the active material is not coated at a long side end in the winding direction. In addition, the first uncoated portion and the second uncoated portion may be configured to face opposite directions.

Here, the positive electrode active material coated on the positive electrode plate and the negative electrode active material coated on the negative electrode plate may use any active materials known in the art be used without limitation.

The separator may include a porous polymer film, for example, a porous polymer film made of a polyolefin-based polymer such as an ethylene homopolymer, a propylene homopolymer, an ethylene/butene copolymer, an ethylene/hexene copolymer and an ethylene/methacrylate copolymer, used singly or a stack of them.

As another example, the separator may include a common porous nonwoven fabric, for example, a nonwoven fabric made of high melting point glass fibers and polyethylene terephthalate fibers.

The separator may have a coating layer of inorganic particles on at least one surface thereof. Additionally, the separator itself may be a coating layer of inorganic particles. The particles that form the coating layer may be bonded to each other with a binder to create interstitial volume between adjacent particles.

In addition, the center hole of the electrode assembly 21 is also used for welding the cell terminal (positive electrode terminal) 24 and the positive electrode current collection plate 23. That is, the cell terminal 24 and the positive electrode current collection plate 23 may be welded by irradiating a laser through the center hole of the electrode assembly 21.

Referring to FIG. 13, the electrode assembly 21 is accommodated in the battery can 22. Also, a through-hole may be formed in the battery can 22. For example, the battery can 22 may be formed in a cylindrical shape, and the electrode assembly 21 may be accommodated inside the battery can 22 and may be electrically connected to the negative electrode plate of the electrode assembly 21. Accordingly, the battery can 22 may have the same polarity as the negative electrode plate, i.e., a negative polarity.

Here, the diameter of the battery can 22 is larger than the diameter of the electrode assembly 21. A gap of a preset size is formed between the battery can 22 and the positive electrode current collection plate 23, and an insulator may be interposed in the gap.

When the size of the battery can 22 is set according to the preset standards, as the size of the electrode assembly 21 increases, the total capacity of the battery cells increases, but the gap between the battery can 22 and the electrode assembly 21 decreases

That is, the gap between the battery can 22 and the electrode assembly 21 decreases with the increasing size of the electrode assembly 21 to increase the total capacity of the battery cells. To increase the capacity of the battery cells, the insulator needs to be disposed in the reduced gap between the battery can 22 and the electrode assembly 21, and to this end, the thickness of the insulator is preferably as small as possible.

The battery can 22 may have the closed portion and the open portion opposite each other. For example, on the basis of FIG. 4, the battery can 22 may have the open portion on bottom. The electrode assembly 21 is accommodated through the open portion on the bottom of the battery can 22, and the electrolyte is injected through the open portion on the bottom of the battery can 22.

That is, the battery can 22 is an approximately cylindrical container having the open portion on the bottom, and is made of, for example, a conductive material such as a metal. The battery can 22 may be made of a conductive metal, for example, aluminum, steel and stainless steel, but is not limited thereto.

In addition, referring to FIG. 13, a closed portion may be formed at the upper portion of the battery can 22. The closed portion may be partially formed at a side opposite to the open portion. A through-hole is formed in the closed portion, and as shown in FIG. 13, the cell terminal 24 is coupled to the through-hole and electrically connected to the positive electrode current collection plate 23 through the through-hole. In addition, referring to FIG. 13, an insulator may be interposed between the battery can 22 and the positive electrode current collection plate 23 at the closed portion.

The positive electrode current collection plate 23 is electrically connected to the positive electrode plate, and for example, referring to FIG. 13, the positive electrode current collection plate 23 is connected to the positive electrode plate at the upper portion of the electrode assembly 21.

The positive electrode current collection plate 23 is made of a conductive metal material and is connected to the first uncoated portion of the electrode assembly 21. The positive electrode current collection plate 23 may be coupled to the upper portion of a coupling surface that is formed by bending an end of the first uncoated portion in a direction parallel to the positive electrode current collection plate 23. The bending direction of the first uncoated portion may be, for example, a direction toward the winding center portion 200 of the electrode assembly 21.

When the first uncoated portion has a bent shape like this, the space occupied by the first uncoated portion is reduced, which may lead to an improvement in energy density. In addition, as the coupling area between the first uncoated portion and the positive electrode current collection plate 23 increases, it may lead to an improvement in coupling strength and a reduction in resistance.

The cell terminal 24 is made of a conductive metal material and is coupled to the through-hole formed in the closed portion of the battery can 22 and electrically connected to the positive electrode current collection plate 23 through the through-hole. In addition, the cell terminal 24 is electrically connected to the positive electrode plate of the electrode assembly 21 through the positive electrode current collection plate 23 and thereby has a positive polarity.

That is, the cell terminal 24 may function as a positive electrode terminal. Also, the battery can 22 is electrically connected to the negative electrode plate of the electrode assembly 21 as described above and thereby has a negative polarity.

The negative electrode current collection plate 25 is connected to the second uncoated portion of the electrode assembly 21. The negative electrode current collection plate 25 is coupled to the lower portion of the electrode assembly 21. The negative electrode current collection plate 25 is made of a conductive metal material such as aluminum, steel, copper, or nickel and may be electrically connected to the second uncoated portion of the negative electrode plate.

The negative electrode current collection plate 25 may be electrically connected to the battery can 22. For this purpose, at least a part of an edge portion of the negative electrode current collection plate 25 may be interposed and fixed between the inner surface of the battery can 22 and the sealing gasket.

In one embodiment, at least a part of an edge portion of the negative electrode current collection plate 25 may be supported on the lower surface of the beading portion 27 formed at the lower end of the battery can 22 and fixed to the beading portion 27 by welding. In a modified embodiment, at least a part of an edge portion of the negative electrode current collection plate 25 may be directly welded to the inner wall surface of the battery can 22.

Also, at least a part of the remaining portion, excluding the coupling portion of the beading portion 27 of the negative electrode current collection plate 25, may be coupled to the bent surface of the second uncoated portion by welding, for example, laser welding.

In addition, at least a part of an edge of the negative electrode current collection plate 25 may be electrically coupled to a surface adjacent to the crimping portion 28 among the upper and lower surfaces of the beading portion 27.

Referring to FIG. 13, the cap plate 26 is configured to seal the open portion formed at the lower end of the battery can 22. The cap plate 26 may be made of, for example, a metal material to secure rigidity.

In addition, the cap plate 26 may be provided as nonpolar by being separated from the electrode assembly 21. That is, even if the cap plate 26 is made of a conductive metal material, the cap plate 26 may not have polarity.

The non-polarity of the cap plate 26 means that the cap plate 26 is electrically insulated from the battery can 22 and the cell terminal 24. As such, the cap plate 26 may not be polarized, and its material does not necessarily have to be a conductive metal.

The cap plate 26 may be placed on and supported by the beading portion 27 formed at the battery can 22. In addition, the cap plate 26 is fixed by the crimping portion 28. A sealing gasket may be interposed between the cap plate 26 and the crimping portion 28 of the battery can 22 to ensure airtightness of the battery can 22. That is, the sealing gasket may be arranged to be interposed between the edge of the cap plate 26 and the open portion of the battery can 22.

The battery can 22 may include a beading portion 27 and a crimping portion 28 at the lower part.

The beading portion 27 is formed by inward beading of the periphery of the outer circumferential surface of the battery can 22 in an area adjacent to the open portion of the battery can 22.

The beading portion 27 may support the electrode assembly 21 to prevent the electrode assembly 21 having a size approximately corresponding to the width of the battery can 22 from slipping out of the open portion formed on the bottom of the battery can 22, and act as a support on which a cap plate 26 is seated. Additionally, the beading portion 27 may support the outer circumferential surface of the sealing gasket.

The crimping portion 28 is extended and bent to the inner side of the battery can 22 to fix the cap plate 26 together with the sealing gasket around the edge of the cap plate 26. Here, the crimping portion 28 is formed at the lower part of the battery can 22 on the basis of the placement of the battery can 22. For example, when the battery can 22 is positioned such that the cell terminal 24 is disposed at the upper part as shown in FIG. 13, the crimping portion 28 is formed at the lower part of the battery can 22 on the basis of FIG. 13. Additionally, as shown in FIG. 13 the crimping portion 28 is formed below the beading portion 27. However, this is only one embodiment, and the positions of the crimping portion 28 and the beading portion 27 are not limited thereto.

In addition, the present disclosure does not preclude the battery can 22 that does not include at least one of the beading portion 27 or the crimping portion 28. In the present disclosure, when the battery can 22 does not include at least one of the beading portion 27 or the crimping portion 28, the securing of the electrode assembly 21, the securing of the cap plate 26 or the sealing of the battery can 22 may be accomplished through at least one of additional application of a component that acts as a stopper for the electrode assembly 21, additional application of a structure on which the cap plate 26 is seated, or welding between the battery can 22 and the cap plate 26.

On the basis of FIG. 13, the crimping portion 28 is formed below the beading portion 27. The crimping portion 28 is extended and bent around the edge of the cap plate 26 disposed below the beading portion 27. By the bent shape of the crimping portion 28, the cap plate 26 is fixed above the beading portion 27.

Meanwhile, the battery can 22 of the present disclosure may not have at least one of the beading portion 27 and the crimping portion 28, and in this case, the sealing gasket may be interposed between a fixing structure provided at the open portion of the battery can 22 and the cap plate 26 to secure the airtightness of the battery can 22.

For example, the crimping portion 28 may be omitted and any other securing structure may be used to fix the cap plate 26 that covers the open portion of the battery can 22. For example, the applicant's patent publication KR 10-2019-0030016 A discloses a cylindrical battery cell in which the beading portion 27 is omitted, and this structure may be employed in the present disclosure.

The cap plate 26 may include a vent notch 29 designed to rupture when the internal pressure of the battery can 22 is higher than the threshold.

For example, the vent notch 29 may be formed on two surfaces of the cap plate 26, and may be formed in at least one of a continuous circular pattern, a discontinuous circular pattern or a linear pattern on the surface of the cap plate 26. Additionally, the vent notch 29 may be formed in a variety of different patterns.

The vent notch 29 may be formed on the bottom of the battery can 22 on the basis of the placement of the battery can 22 of FIG. 13, and when the vent notch 29 ruptures, gas in the battery can 22 may be discharged out through the bottom of the battery can 22. For example, when the battery can 22 is positioned such that the cell terminal 24 is disposed at the upper part as shown in FIG. 13, the vent notch 29 may be formed on the bottom of the battery can 22 on the basis of FIG. 13.

The vent notch 29 may be an area having a smaller thickness than any other area of the cap plate 26.

Since the vent notch 29 is thinner than the surrounding area, the vent notch 29 may be more prone to rupture than the surrounding area, and when the internal pressure of the battery can 22 is equal to or higher than the predetermined level, the vent notch 29 may rupture to discharge out gas inside of the battery can 22.

For example, the vent notch 29 may be formed by partially reducing the thickness of the battery can 22 through notching on one or two surfaces of the cap plate 26.

The cylindrical battery cell 20 according to an embodiment of the present disclosure may have a structure in which positive and negative electrode terminals are arranged at the upper part on the basis of FIG. 13, resulting in the more complex upper structure than the lower structure.

Accordingly, to smoothly discharge out gas inside of the battery can 22, the cap plate 26 that forms the lower surface of the cylindrical battery cell 20 may have the vent notch 29.

As described above, when gas inside of the battery can 22 provided in the cylindrical battery cell 20 is discharged out downwards, it may be good for the user's safety.

For example, in case that the cylindrical battery cell 20 is positioned immediately below the driver's seat in an electric vehicle, when gas is discharged out upwards, there may be safety accident risks of the driver. However, when gas is discharged out through the bottom of the battery can 22 as in the cylindrical battery cell 20 according to an embodiment of the present disclosure, the above-described problem does not occur in case that the cylindrical battery cell 20 is positioned immediately below the driver's seat in an electric vehicle.

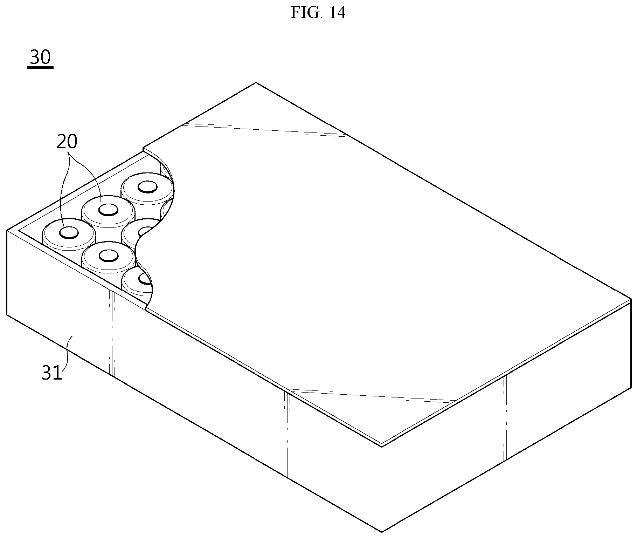

FIG. 14 is a schematic drawing showing the configuration of a battery pack including the cylindrical battery cell according to each embodiment of the present disclosure.

Referring to FIG. 14, a battery pack 30 according to an embodiment of the present disclosure may include at least one cylindrical battery cell 20 according to an embodiment of the present disclosure as described above. Here, the cylindrical battery cell 20 may include at least one current collection plate 10 according to an embodiment of the present disclosure as described above.

In addition, the battery pack 30 may further include a pack housing 31 for accommodating the cylindrical battery cell 20, and various devices for controlling charging and discharging of the cylindrical battery cell 20, such as a BMS, a current sensor, a fuse, etc.

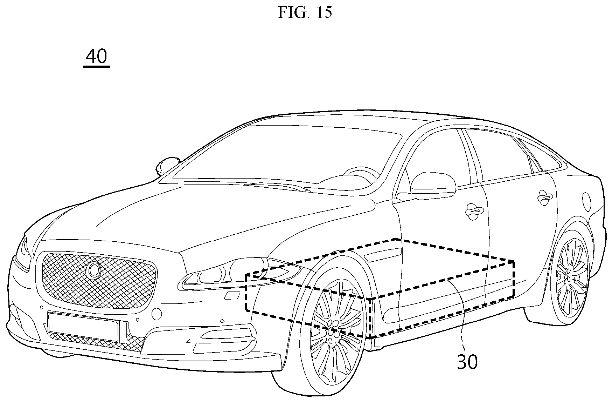

FIG. 15 is a drawing for explaining a vehicle including the battery pack according to each embodiment of the present disclosure.

Referring to FIG. 15, a vehicle 40 according to an embodiment of the present disclosure may include at least one cylindrical battery cell 20 or at least one battery pack 30 according to each of the embodiments described above. In addition, the battery pack 30 includes the cylindrical battery cell 20 according to each of the embodiments described above.

Here, the vehicle 40 includes various vehicles that are designed to use electricity, such as an electric vehicle or a hybrid electric vehicle.

When the terms indicating directions as used herein such as upper, lower, left, and right are used for convenience of description only, these terms are just for convenience of explanation, and it is obvious to those skilled in the art that the terms may change depending on the position of the stated element or an observer.

The present disclosure has been described in detail. However, it should be understood that the detailed description and specific examples, while indicating preferred embodiments of the disclosure, are given by way of illustration only, since various changes and modifications within the scope of the disclosure will become apparent to those skilled in the art from this detailed description. Therefore, the previously disclosed embodiments should be considered from an explanatory perspective rather than a limiting perspective. In other words, the scope of the true technical idea of the present disclosure is shown in the claims, and all differences within the scope of equivalence should be interpreted as being included in the present disclosure.

### INDUSTRIAL APPLICABILITY

The present disclosure relates to a current collection plate, a cylindrical battery cell including the same, and a battery pack and a vehicle including the cylindrical battery cell, and particularly, is available to industries related to secondary batteries.

## Claims

1. A current collection plate, which electrically connects an electrode assembly accommodated in a cylindrical battery cell, the current collection plate comprising:
a border portion defining a border;
a center portion spaced apart from the border portion and coupled to the electrode assembly; and
a connection portion configured to connect the border portion and the center portion, the connection portion being formed to have a varying width.

2. The current collection plate according to claim 1,
wherein the border portion has a rim shape in which at least a part of an inner region thereof is empty

3. The current collection plate according to claim 1,
wherein the connection portion includes a first part connected to the center portion and a second part connected to the border portion, and a width of the first part is narrower than a width of the second part.

4. The current collection plate according to claim 3,
wherein a first connection part between the first part and the second part is formed to be inclined.

5. The current collection plate according to claim 4,
wherein the first connection part includes a first inclined part at one side and a second inclined part at the other side, and the first inclined part and the second inclined part are formed symmetrically to each other.

6. The current collection plate according to claim 4,
wherein the first connection part is formed to be inclined so as to extend from the first part toward the second part and is connected to the second part.

7. The current collection plate according to claim 6,
wherein an end of the second part is located further from the center portion than an end of the first part at an outside of the end of the first part, and
wherein the first connection part connects the end of the first part and the end of the second part from the end of the first part toward the second part.

8. The current collection plate according to claim 4,
wherein the first connection part is formed to be inclined so as to extend from the first part toward the center portion and is connected to the second part.

9. The current collection plate according to claim 8,
wherein an end of the second part is located closer to the center portion than an end of the first part at an outside of the end of the first part, and
wherein the first connection part connects the end of the second part from the end of the first part toward the center portion.

10. The current collection plate according to claim 3,
wherein the first part and the second part are connected perpendicularly to each other.

11. The current collection plate according to claim 10,
wherein an end of the second part is located outer than an end of the first part,
wherein the end of the second part and the end of the first part are located at the same distance from the center portion, and
wherein the first connection part connects the end of the first part and the end of the second part to each other.

12. The current collection plate according to claim 3,
wherein a second connection part between the second part and the border portion is formed to be inclined.

13. The current collection plate according to claim 12,
wherein the second connection part includes a third inclined part at one side and a fourth inclined part at the other side, and the third inclined part and the fourth inclined part are formed symmetrically.

14. The current collection plate according to claim 13,
wherein a through-hole is formed between the third inclined part and the fourth inclined part.

15. A cylindrical battery cell comprising at least one current collection plate according to any one of claims 1 to 14.

16. A battery pack comprising at least one cylindrical battery cell according to claim 15.

17. A vehicle comprising at least one cylindrical battery cell according to claim 15.
